# EUROPÄISCHE PATENTSCHRIFT

(11) **EP 3 102 921 B1**
(45) Veröffentlichungstag und Bekanntmachung des Hinweises auf die Patenterteilung: **13.09.2017**
(21) Anmeldenummer: 15700175.1
(22) Anmeldetag: 14.01.2015
(51) Int. Cl.: G01N 5/04

(54) **VERFAHREN ZUR FUNKTIONSPRÜFUNG EINES MESSGERÄTES**
METHOD FOR FUNCTIONALLY TESTING A MEASURING DEVICE
PROCÉDÉ DE CONTRÔLE DE FONCTIONNEMENT D'UN APPAREIL DE MESURE

(30) Priorität: 06.02.2014 DE 102014101462
(43) Veröffentlichungstag der Anmeldung: 14.12.2016
(73) Patentinhaber: Sartorius Lab Instruments GmbH & Co. KG, 37079 Göttingen (DE)
(72) Erfinder: DUDDA, Olaf, 37081 Göttingen (DE); SPANNAGEL, Wilfried, 37081 Göttingen (DE); FÄRGER, Daniel, 37154 Northeim (DE)
(86) Internationale Anmeldenummer: PCT/EP2015/000052
(87) Internationale Veröffentlichungsnummer: WO 2015/117720

(56) Entgegenhaltungen:
- EP-A1- 1 850 110
- EP-A1- 2 442 091
- DE-A1- 3 941 347

## Beschreibung

### Gebiet der Erfindung

Die Erfindung bezieht sich auf Verfahren zur Funktionsprüfung eines Messgerätes zur gravimetrischen Materialfeuchtebestimmung, umfassend eine Wägevorrichtung und eine Heizeinrichtung zum Beheizen eines auf einer Lastaufnahme positionierten Messgutes , umfassend die Schritte:
- Positionieren eines durch Beheizen mittels der Heizeinrichtung trockenbaren Messgutes auf der Lastaufnahme,
- Beheizen des Messgutes gemäß einem vorgegebenen, monotonen Heizverlauf,
- Ermitteln eines Gewichtsverlaufs des Messgutes durch Messen wenigstens zweier Gewichtswerte zu unterschiedlichen Zeitpunkten, von denen wenigstens einer während des Beheizschrittes gemessen wird,
- Extrahieren eines Prüfwertes aus dem ermittelten Gewichtsverlauf,
- Vergleichen des Prüfwertes mit einem gespeicherten Referenzwert.

### Stand der Technik

Der relative Feuchtegehalt einer Materialprobe wird in der Praxis häufig gravimetrisch mit Hilfe von Messgeräten ermittelt, die aus einer Kombination aus einer Heizeinrichtung und einer Wägevorrichtung bestehen. Für den Nutzer solcher Messgeräte ist es von Interesse, die Funktionalität dieser beiden Komponenten gleichzeitig zu überprüfen. Dies geschieht häufig mithilfe sogenannter Referenzproben, deren Feuchtegehalt und Trocknungscharakteristika für verschiedene Heizparameter einmalig empirisch ermittelt werden. Diese Eigenschaften der Referenzprobe sind, wie nachfolgend erläutert, für die Funktionsprüfung essenziell und müssen daher entweder unmittelbar vor der eigentlichen Funktionsprüfung erfasst oder in der Zeit zwischen ihrer Erfassung und der eigentlichen Durchführung der Funktionsprüfung konserviert werden.

Ein Verfahren zur Funktionsprüfung eines Messgerätes zur gravimetrischen Materialfeuchtebestimmung (im Folgenden kurz als Messgerät bezeichnet) ist beispielsweise aus der EP 2 442 091 A1 bekannt. Bei diesem Verfahren wird das Ausgangsgewicht eines Messgutes, nämlich einer Referenzprobe im o.g. Sinn, bestimmt, der Prüfraum mittels eines vordefinierten Temperaturprofils erhitzt und anschließend als Prüfwert erneut das Gewicht der Referenzprobe ermittelt. Durch Vergleich des Prüfwertes mit einem in einem Speicher hinterlegten Referenzwert ist es auf diese Weise möglich, eine Aussage über die Funktionalität des Messgerätes zu treffen. Der Referenzwert ist dabei ein Gewichtswert, der unter standardisierten Bedingungen an einem der aktuellen Referenzprobe gleichen Messgut generiert worden ist. Liegt die Differenz zwischen Prüf- und Referenzwert innerhalb vorgegebener Toleranzen, ist das Ergebnis der Funktionsprüfung des Messgerätes positiv, d.h. das Messgerät arbeitet hinreichend genau. Das Messgerät arbeitet hingegen ungenau, wenn die ermittelte Differenz außerhalb der vorgegebenen Toleranzen liegt, das Ergebnis der Funktionsprüfung also negativ ist. Der spezielle Referenzwert für eine bestimmte Referenzprobe ist dabei über das Ausgangsgewicht mit der Referenzprobe verknüpft (Gleichheit der übrigen Eigenschaften, insbesondere des Feuchtegehalts, wird stillschweigend unterstellt). Durch Bestimmung des Ausgangsgewichts der Referenzprobe kann somit direkt auf den entsprechenden Referenzwert rückgeschlossen werden.

Die Verknüpfung des Referenzwertes mit dem Ausgangsgewicht der Referenzprobe, d.h. deren Identifikation anhand ihres Ausgangsgewichtes, stellt jedoch gleichzeitig ein erhebliches Problem der bisher bekannten Funktionsprüfungsverfahren für diese Art von Messgeräten dar. Dies gilt insbesondere im Zusammenhang mit den teilweise erheblich langen Lagerzeiten der Referenzproben, die zwischen den einzelnen Prüfungsintervallen auftreten und bei unzureichenden Konservierungs-, insbesondere Verpackungs-, Maßnahmen zu einer Änderung relevanter Eigenschaften führen können. Es wäre wünschenswert, dass durch die Lagerung hervorgerufene Veränderungen des Messgutes keinerlei Einfluss auf das Funktionsprüfungsverfahren haben, dass also keine wohldefinierten Referenzproben im o.g. Sinn erforderlich wären. Dies ist bei den bisher bekannten Verfahren jedoch nicht der Fall. Insbesondere während der Lagerung auftretende Variationen der Zusammensetzung des Messgutes, wie beispielsweise durch Verdunstung flüchtiger Bestandteile, würden bei den bekannten Verfahren aufgrund der damit verbundenen Variationen der Ausgangsmasse zu fehlerhaften Referenzwerten und damit zu erheblichen Ungenauigkeiten hinsichtlich der Funktionsprüfung führen. Die Versuche, dieses Problem zu eliminieren, beschränken sich bisher, wie in der EP 2 442 091 A1 beschrieben, darauf, die Verpackung der Referenzproben so zu gestalten, dass keine Veränderung der Ausgangsmasse über die Lagerperiode auftritt. Dies ist jedoch mit erheblichen Kosten und Aufwand verbunden. Die EP 2 442 091 A1 beschreibt zusätzlich die Möglichkeit, den Referenzwert nicht mit dem Ausgangsgewicht sondern einem vom Temperaturverlauf abhängigen Gewicht zu verknüpfen. Dieses Referenzgewicht steht jedoch in direkter Abhängigkeit zum Ausgangsgewicht, sodass das bereits oben thematisierte Problem in Bezug auf die fehlerhaften Referenzwerte auch auf diese Weise nicht gelöst werden kann.

### Aufgabenstellung

Es ist die Aufgabe der vorliegenden Erfindung, ein gattungsgemäßes Verfahren zur Funktionsprüfung eines Messgerätes zur gravimetrischen Materialfeuchtebestimmung derart weiterzubilden, dass die Funktionsprüfung unabhängig von der Bestimmung eines besonderen Referenzgewichts durchgeführt werden kann.

### Darlegung der Erfindung

Diese Aufgabe wird in Verbindung mit den Merkmalen des Oberbegriffs von Anspruch 1 dadurch gelöst, dass der Gewichtsverlauf durch Messen einer Mehrzahl von Gewichtswerten zu unterschiedlichen Zeitpunkten während des Beheizschrittes ermittelt und als Prüfwert der Betrag der Steigung eines für einen charakteristischen Prüfbereich des Gewichtsverlaufs repräsentativen Geradenabschnitts bestimmt wird.

Bevorzugte Ausführungsformen des Funktionsprüfungsverfahrens sind Gegenstand der abhängigen Ansprüche.

Zur Durchführung des erfindungsgemäßen Funktionsprüfungsverfahrens wird ein Messgut auf der Lastaufnahme positioniert, mit einem monotonen Heizverlauf, d.h. die Beheizung mittels der Heizeinrichtung wird während der Beheizung nicht unterbrochen, beheizt und der Gewichtsverlauf ermittelt. Die Ermittlung des Gewichtsverlaufs aus den gemessen Gewichtswerten kann dabei beispielsweise durch eine Erfassung der Gewichtswerte als Funktion der Heizzeit erfolgen. Für die Ermittlung des Gewichtsverlaufs stehen dem Fachmann jedoch noch eine Reihe weiterer Möglichkeiten zur Verfügung. Beispielsweise können die Gewichtswerte auch als relativer Feuchtegehalt des Messgutes angegeben oder die Gewichts- bzw. Feuchtegehaltswerte neben der Heizzeit auch als Funktion einer geeigneten Temperatur erfasst werden. Diese Temperatur kann beispielsweise eine durch das Beheizen erhöhte Temperatur einer Prüfkammer, in der sich das Messgut befindet, sein.

Zur Realisierung der Erfindung ist bevorzugt vorgesehen, dass eine Regressionsfunktion aus dem Gewichtsverlauf ermittelt wird, der Gewichtsverlauf in Gewichtsteilverläufe unterteilt wird und der charakteristische Prüfbereich aus wenigstens einem Gewichtsteilverlauf, für den die Steigungen der Regressionsfunktion einen Betrag aufweisen, der größer oder gleich einem Minimalsteigungswert ist, gebildet wird. Die Ermittlung der Regressionsfunktion kann beispielsweise derart erfolgen, dass die Summe aller Abstände oder Abstandsquadrate der Punkte des Gewichtsverlaufs zur Regressionsfunktion minimal ist. Es ist jedoch auch möglich zunächst eine Hilfsfunktion zu bestimmen, die alle Punkte des Gewichtsverlaufs exakt beschreibt und anschließend eine Regressionsfunktion, mit der alle lokalen Maxima oder Minima der Hilfsfunktion beschrieben werden können, zu bestimmen. Es ist vorteilhaft, wenn der für den charakteristischen Prüfbereich des Gewichtsverlaufs repräsentative Geradenabschnitt eine betragsmäßig große Steigung aufweist, da dies die Genauigkeit des ermittelten Prüfwertes erhöht. Aus diesem Grund ist vorgesehen, den Prüfwert lediglich aus denjenigen Gewichtsteilverläufen zu extrahieren, für den die Steigungen der Regressionsfunktion einen Betrag aufweisen, der größer oder gleich dem Minimalsteigungswert ist. Diese Gewichtsteilverläufe bilden in diesem Fall den charakteristischen Prüfbereich. Der Prüfwert kann dann beispielsweise mittels einer linearen Ausgleichsfunktion aus allen Gewichtsverlaufspunkten des charakteristischen Prüfbereichs ermittelt werden. In diesem Fall stellt die lineare Ausgleichsfunktion den für den charakteristischen Prüfbereich repräsentativen Geradenabschnitt dar, sodass der Betrag der Steigung der linearen Ausgleichsfunktion den Prüfwert bildet. Die lineare Ausgleichsfunktion kann dabei beispielsweise so gewählt werden, dass die Summe aller Abstände oder Abstandsquadrate der Gewichtsverlaufspunkte des charakteristischen Prüfbereichs zur linearen Ausgleichsfunktion minimal ist.

Die Erfindung zeichnet sich dadurch aus, dass der Prüfwert lediglich indirekt, nämlich in Form des Betrages der Steigung eines repräsentativen Geradenabschnitts, aus dem Gewichtsverlauf extrahiert wird. Diese indirekte Extraktion ist äußerst vorteilhaft, da der Betrag dieser Steigung einen geeigneten Prüfwert für die Funktionsprüfung des Messgerätes darstellt, jedoch unabhängig von einem besonderen Referenzgewicht ist. Auf diese Weise ermöglicht es das erfindungsgemäße Verfahren, die Funktionsprüfung mit einem Messgut mit beliebigem Ausgangsgewicht durchzuführen. Die Funktionsprüfung des Messgerätes kann somit ohne die bereits beschriebenen Komplikationen hinsichtlich einer lagerungsbedingten Variation des Messgutes erfolgen. Das Messgut kann dabei beispielsweise ein verpacktes oder unverpacktes, aus Wasser, Glyzerin und Polymeren aufgebautes Hydrogel sein.

Bei einer alternativen Ausführungsform der Erfindung ist vorgesehen, dass ein Wendepunkt einer aus dem Gewichtsverlauf ermittelten Regressionsfunktion bestimmt wird, der Gewichtsverlauf in Gewichtsteilverläufe unterteilt wird und der charakteristische Prüfbereich aus einem Gewichtsteilverlauf, der symmetrisch um den Wendepunkt verteilte Grenzen aufweist, gebildet wird. Ein geeigneter charakteristischer Prüfbereich, d.h. ein charakteristischer Prüfbereich aus dem ein betragsmäßig möglichst großer und damit möglichst genauer Prüfwert extrahiert werden kann, wird also in vorteilhafter Weise mittels des Wendepunktes der Regressionsfunktion identifiziert. Ein weiteres Merkmal dieser Ausführungsform ist, dass die Prüfbereichsgrenzen symmetrisch um den Wendepunkt angeordnet werden. Daher genügt es, ausgehend vom Wendepunkt, lediglich die Bedingungen zur Positionierung einer Prüfbereichsgrenze zu überprüfen. Beispielsweise könnte der Betrag der Steigung der Regressionsfunktion ermittelt werden und die erste Prüfbereichsgrenze festgelegt werden, sobald dieser Betrag einen Minimalsteigungswert unterschreitet. Für die Positionierung einer weiteren Prüfbereichsgrenze ist dann keinerlei Überprüfung der Positionierungsbedingungen mehr erforderlich, da die Positionierung aufgrund des Symmetriezusammenhanges zur ersten Prüfbereichsgrenze erfolgen kann.

Bei einer weiteren alternativen Ausführungsform der Erfindung ist vorgesehen, dass der größte Betrag einer Steigung einer aus dem Gewichtsverlauf ermittelten Regressionsfunktion als Prüfwert verwendet. wird. Auf diese Weise kann auf eine Einteilung des Gewichtsverlauf in Gewichtsteilverläufe vollständig verzichtet werden. Es ist vielmehr ausreichend, eine Regressionsfunktion auf Basis des Gewichtsverlaufs zu erstellen, den Steigungsverlauf der Regressionsfunktion zu analysieren und auf Basis dieser Analyse den Prüfwert zu extrahieren. In diesem Fall stellt der Bereich des Gewichtsverlaufs, für den die Regressionsfunktion ermittelt worden ist, den charakteristischen Prüfbereich und eine Steigungsgerade durch den Punkt der betragsmäßig größten Steigung der Regressionsfunktion den repräsentativen Geradenabschnitt dar.

Eine weitere alternative Ausbildungsform der Erfindung sieht vor, dass der Gewichtsverlauf in Gewichtsteilverläufe unterteilt wird und für jeden Gewichtsteilverlauf die Steigung einer repräsentativen Geraden auf Basis der Gewichtswerte dieses Gewichtsteilverlaufs ermittelt wird, wobei die Größe der Gewichtsteilverläufe so gewählt wird, dass die Steigungen der repräsentativen Geraden dasselbe Vorzeichen aufweisen, und der größte Betrag der Steigungen der repräsentativen Geraden als Prüfwert verwendet wird. Die Bedingung, dass die Größe der Gewichtsverläufe so gewählt wird, dass die Steigungen der repräsentativen Geraden dasselbe Vorzeichen aufweisen ist vorteilhaft, da im Gewichtsverlauf ein Rauschen bei hinreichender Auflösung, d.h. ausreichend sensitiver Ermittlung der Gewichtswerte, auftreten kann. Bei zu kleiner Wahl der Gewichtsteilverläufe resultieren daher unterschiedliche Steigungsvorzeichen bei benachbarten Gewichtsteilverläufen. Durch diese spezielle Bedingung wird sichergestellt, dass der charakteristische Prüfbereich, der in diesem Fall derjenige Gewichtsteilverlauf ist, dessen repräsentative Gerade die betragsmäßig größte Steigung aufweist, charakteristisch für den Gewichtsverlauf ist.

Bei einer alternativen Ausführungsform der Erfindung ist vorgesehen, dass der Gewichtsverlauf in Gewichtsteilverläufe unterteilt wird und für jeden Gewichtsteilverlauf die Steigung einer repräsentativen Geraden auf Basis der Gewichtswerte dieses Gewichtsteilverlaufs ermittelt wird, wobei die Größe der Gewichtsteilverläufe so gewählt wird, dass die Steigungen der repräsentativen Geraden dasselbe Vorzeichen aufweisen, und der charakteristische Prüfbereich aus wenigstens einem Gewichtsteilverlauf, für den die Steigung einer repräsentativen Geraden einen Betrag aufweist, der größer oder gleich einem Minimalsteigungswert ist, gebildet wird. Diese Ausführungsform ist vorteilhaft, da über den Minimalsteigungswert die Größe des charakteristischen Prüfbereichs variiert werden kann. Ein größerer charakteristischer Prüfbereich, d.h. ein charakteristischer Prüfbereich der aus einer größeren Anzahl Gewichtsteilverläufe gebildet wird, liefert dabei einen statistisch sichereren Prüfwert als ein kleiner charakteristischer Prüfbereich, wohingegen in einem kleinen charakteristischen Prüfbereich ein kleinerer Linearisierungsfehler bei der Bestimmung des repräsentativen Geradenabschnitts zu erwarten ist. Der Minimalsteigungswert ermöglicht es somit, das Funktionsprüfungsverfahren an die jeweils benötigten Anforderungen anzupassen.

Die mathematischen Methoden und Verfahren hierzu sind dem Fachmann hinlänglich bekannt und bedürfen daher keiner weiteren Erklärung.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung eines Messgerätes, das zur Durchführung des erfindungsgemäßen Funktionsprüfungsverfahrens geeignet ist,
- Figur 2:: eine Illustration einer Ausführungsform des erfindungsgemäßen Funktionsprüfungsverfahrens.

### Beschreibung bevorzugter Ausführungsformen

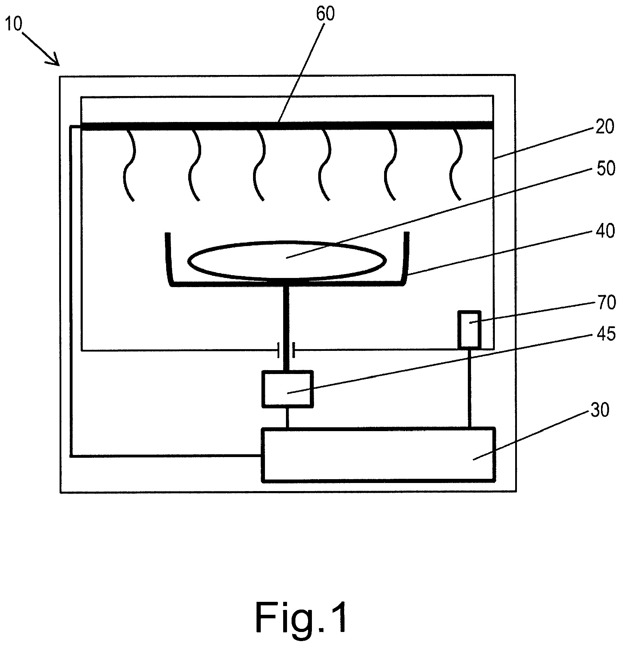

Figur 1 zeigt ein Messgerät 10, das mit einer Prüfkammer 20 und einer Steuereinheit 30 ausgestattet ist. Innerhalb der Prüfkammer 20 ist auf einer Lastaufnahme 40 ein Messgut 50 positioniert, das mit einer Heizeinrichtung 60, wie beispielsweise ein IR-Strahler, beheizt werden kann. Zusätzlich befindet sich ein Temperatursensor 70 in der Prüfkammer 20. Es ist außerdem darstellt, dass der Steuereinheit 30 das Gewichtsmesssignal einer Wägeeinheit 45 und das Temperatursignal des Temperatursensors 70 zugeführt wird und die Steuereinheit 30 in der Lage ist, die Heizeinrichtung 60 zu steuern. Die Steuereinheit 30 ist in der Lage diese ein- und ausgehenden Signale zu verarbeiten. Auf diese Weise kann die Steuereinheit 30 das Beheizen des Messgutes 50 mittels der Heizeinrichtung 60 initiieren und auf Basis des Wäge- und Temperatursignals den Gewichtsverlauf ermitteln. Alternativ kann dieser auch lediglich auf Basis des Wägesignals bestimmt werden. Dies ist möglich, da das Beheizen des Messgutes durch die Steuereinheit 30 gestartet wird und diese somit einen Gewichtsverlauf auf Basis des Wägesignales sowie der seit Initiation der Beheizung vergangenen Zeit ermitteln kann. In diesem Ausführungsbeispiel besteht die Wägevorrichtung aus der Lastaufnahme 40 und der Wägeeinheit 45.

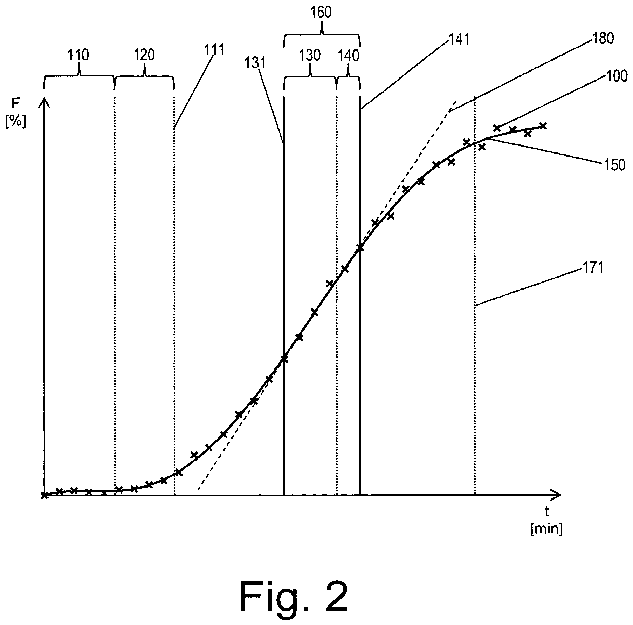

Figur 2 zeigt eine beispielhafte Darstellung eines Gewichtsverlaufs, der aus Gewichtsverlaufspunkten 100 aufgebaut ist. Die Gewichtsverlaufspunkte 100 sind dabei aus den zu unterschiedlichen Zeitpunkten während des Beheizschrittes ermittelten Gewichtswerten generiert worden. In diesem Fall wurden relative Feuchtigkeitsabgabewerte F aus den gemessenen Gewichtswerten bestimmt und gegen die seit Initiation des Beheizschrittes vergangene Zeit t aufgetragen. Figur 2 zeigt weiterhin die Unterteilung des Gewichtsverlaufs in Gewichtsteilverläufe 110, 120, 130, 140, sowie eine aus dem Gewichtsverlauf ermittelte Regressionsfunktion 150. Die Steigungen der Regressionsfunktion 150 sind im Bereich der Gewichtsteilverläufe 130 und 140 größer oder gleich einem vorgegebenen Minimalsteigungswert. Aus diesem Grund wird der charakteristische Prüfbereich 160 aus diesen Gewichtsteilverläufen gebildet. Die Gewichtsteilverlaufsgrenzen 131, 141 bilden daher in diesem Fall die Grenzen des charakteristischen Prüfbereichs 160, die zu Illustrationszwecken gegenüber weiteren in Figur 2 dargestellten Gewichtsteilverlaufsgrenzen 111, 171 verändert dargestellt sind. Figur 2 zeigt zudem eine Illustration einer linearen Ausgleichsfunktion 180, die auf Basis der im charakteristischen Prüfbereich 160 befindlichen Gewichtsverlaufspunkte generiert worden ist. Der Betrag der Steigung dieser Ausgleichsfunktion stellt in diesem Fall den Prüfwert dar. Durch Vergleich dieses Prüfwertes mit einem zuvor ermittelten Referenzwert, kann somit eine Aussage über die Funktionalität des Messgerätes getroffen werden. Der Referenzwert wird hierfür aus einer in der Steuereinheit 30 gespeicherten Referenzwert-Tabelle, in der die für unterschiedliche Messgutarten zu erwartenden Steigungswerte hinterlegt sind, entnommen. Ist die Differenz zwischen Prüf- und Referenzwert innerhalb vorgegebener Toleranzen, ist die Funktionsprüfung des Messgerätes positiv, d.h. das Messgerät arbeitet hinreichend genau.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Messgerät
- 20: Prüfkammer
- 30: Steuereinheit
- 40: Lastaufnahme
- 45: Wägeeinheit
- 50: Messgut
- 60: Heizeinrichtung
- 70: Temperatursensor
- 100: Gewichtsverlaufspunkte
- 110, 120, 130, 140: Gewichtsteilverläufe
- 111: Gewichtsteilverlaufsgrenze
- 131: Gewichtsteilverlaufsgrenze von 130
- 141: Gewichtsteilverlaufsgrenze von 140
- 150: Regressionsfunktion
- 160: charakteristischer Prüfbereich
- 171: Gewichtsteilverlaufsgrenze
- 180: lineare Ausgleichsfunktion

## Patentansprüche

1. Verfahren zur Funktionsprüfung eines Messgerätes zur gravimetrischen Materialfeuchtebestimmung (10), umfassend eine Wägevorrichtung und eine Heizeinrichtung (60) zum Beheizen eines auf einer Lastaufnahme (40) positionierten Messgutes (50),
umfassend die Schritte:
- Positionieren des Messgutes (50) auf der Lastaufnahme (40),
- Beheizen des Messgutes (50) gemäß einem vorgegebenen, monotonen Heizverlauf,
- Ermitteln eines Gewichtsverlaufs des Messgutes (50) durch Messen wenigstens zweier Gewichtswerte zu unterschiedlichen Zeitpunkten, von denen wenigstens einer während des Beheizschrittes gemessen wird,
- Extrahieren eines Prüfwertes aus dem ermittelten Gewichtsverlauf,
- Vergleichen des Prüfwertes mit einem gespeicherten Referenzwert,
**dadurch gekennzeichnet,**
**dass** der Gewichtsverlauf durch Messen einer Mehrzahl von Gewichtswerten zu unterschiedlichen Zeitpunkten während des Beheizschrittes ermittelt und als Prüfwert der Betrag der Steigung eines für einen charakteristischen Prüfbereich (160) des Gewichtsverlaufs repräsentativen Geradenabschnitts bestimmt wird und dass der Referenzwert ein für das Messgut zu erwartender und abgespeicherter Steigungswert ist.

2. Verfahren nach Anspruch 1,
**dadurch gekennzeichnet,**
**dass** eine Regressionsfunktion (150) aus dem Gewichtsverlauf ermittelt wird, der Gewichtsverlauf in Gewichtsteilverläufe (110, 120, 130, 140) unterteilt wird und der charakteristische Prüfbereich (160) aus wenigstens einem Gewichtsteilverlauf (110, 120, 130, 140), für den die Steigungen der Regressionsfunktion (150) einen Betrag aufweisen, der größer oder gleich einem Minimalsteigungswert ist, gebildet wird.

3. Verfahren nach Anspruch 1,
**dadurch gekennzeichnet,**
**dass** ein Wendepunkt einer aus dem Gewichtsverlauf ermittelten Regressionsfunktion (150) bestimmt wird, der Gewichtsverlauf in Gewichtsteilverläufe (110, 120, 130, 140) unterteilt wird und der charakteristische Prüfbereich (160) aus einem Gewichtsteilverlauf (110, 120, 130, 140), der symmetrisch um den Wendepunkt verteilte Grenzen aufweist, gebildet wird.

4. Verfahren nach Anspruch 1,
**dadurch gekennzeichnet,**
**dass** der größte Betrag einer Steigung einer aus dem Gewichtsverlauf ermittelten Regressionsfunktion (150) als Prüfwert verwendet wird.

5. Verfahren nach Anspruch 1,
**dadurch gekennzeichnet,**
**dass** der Gewichtsverlauf in Gewichtsteilverläufe (110, 120, 130, 140) unterteilt wird und für jeden Gewichtsteilverlauf (110, 120, 130, 140) die Steigung einer repräsentativen Geraden auf Basis der Gewichtswerte dieses Gewichtsteilverlaufs (110, 120, 130, 140) ermittelt wird, wobei die Größe der Gewichtsteilverläufe (110, 120, 130, 140) so gewählt wird, dass die Steigungen der repräsentativen Geraden dasselbe Vorzeichen aufweisen, und der größte Betrag der Steigungen der repräsentativen Geraden als Prüfwert verwendet wird.

6. Verfahren nach Anspruch 1,
**dadurch gekennzeichnet,**
**dass** der Gewichtsverlauf in Gewichtsteilverläufe (110, 120, 130, 140) unterteilt wird und für jeden Gewichtsteilverlauf (110, 120, 130, 140) die Steigung einer repräsentativen Geraden auf Basis der Gewichtswerte dieses Gewichtsteilverlaufs (110, 120, 130, 140) ermittelt wird, wobei die Größe der Gewichtsteilverläufe (110, 120, 130, 140) so gewählt wird, dass die Steigungen der repräsentativen Geraden dasselbe Vorzeichen aufweisen, und der charakteristische Prüfbereich (160) aus wenigstens einem Gewichtsteilverlauf (110, 120, 130, 140), für den die Steigung einer repräsentativen Geraden einen Betrag aufweist, der größer oder gleich einem Minimalsteigungswert ist, gebildet wird.

## Claims

1. Method of checking the functioning of a measuring instrument for gravimetric material moisture determination (10), comprising a weighing device and a heating device (60) for heating a material (50) which is to be measured and which is positioned on a load receiver (40), comprising the steps of:
- positioning the material (50), which is to be measured, on the load receiver (40),
- heating the material (50), which is to be measured, in accordance with a predetermined monotonous course of heating,
- determining a weight course of the material (50), which is to be measured, by measuring at least two weight values at different points in time, of which at least one is measured during the heating step,
- extracting a test value from the determined weight course and
- comparing the test value with a stored reference value,
**characterised in that**
the weight course is determined by measuring a plurality of weight values at different points in time during the heating step and as test value the amount of the gradient of a straight section, which is representative of a characteristic test region (160) of the weight course, is determined and that the reference value is a gradient value which is to be expected for the material to be measured and which is stored.

2. Method according to claim 1, **characterised in that** a regression function (150) is determined from the weight course, which weight course is divided into weight sub-courses (110, 120, 130, 140) and the characteristic test region (160) is formed from at least one weight sub-course (110, 120, 130, 140) for which the gradients of the regression function (150) have an amount which is greater than or equal to a minimum gradient value.

3. Method according to claim 1, **characterised in that** a turning point of a regression function (150) determined from the weight course is ascertained, the weight course is divided into weight sub-courses (110, 120, 130, 140) and the characteristic test region (160) is formed from a weight sub-course (110, 120, 130, 140) which has boundaries distributed symmetrically about the turning point.

4. Method according to claim 1, **characterised in that** the largest amount of a gradient of a regression function (150) determined from the weight course is used as test value.

5. Method according to claim 1, **characterised in that** the weight course is divided into weight sub-courses (110, 120, 130, 140) and for each weight sub-course (110, 120, 130, 140) the gradient of a representative straight line is determined on the basis of the weight values of this weight sub-course (110, 120, 130, 140), wherein the size of the weight sub-courses (110, 120, 130, 140) is so selected that the gradients of the representative straight lines have the same sign and the greatest amount of the gradients of the representative straight lines is used as test value.

6. Method according to claim 1, **characterised in that** the weight course is divided into weight sub-courses (110, 120, 130, 140) and for each weight sub-course (110, 120, 130, 140) the gradient of a representative straight line is determined on the basis of the weight values of this weight sub-course (110, 120, 130, 140), wherein the size of the weight sub-courses (110, 120, 130, 140) is so selected that the gradients of the representative straight lines have the same sign and the characteristic test region (160) is formed from at least one weight sub-course (110, 120, 130, 140) for which the gradient of a representative straight line has an amount greater than or equal to a minimum gradient value.

## Revendications

1. Procédé de contrôle du fonctionnement d'un appareil de mesure servant à déterminer (10) l'humidité d'un matériau de façon gravimétrique, comprenant un dispositif de pesage et un dispositif de chauffage (60) servant à chauffer un article à mesurer (50) positionné sur un support de charge (40),
comprenant les étapes consistant à :
- positionner l'article à mesurer (50) sur le support de charge (40),
- chauffer l'article à mesurer (50) selon une courbe de chauffe monotone prédéfinie,
- déterminer une variation de poids de l'article à mesurer (50) par mesure d'au moins deux valeurs de poids à différents moments, dont au moins l'une est mesurée pendant l'étape de chauffage,
- extraire une valeur de contrôle de la variation de poids déterminée,
- comparer la valeur de contrôle à une valeur de référence mise en mémoire,
**caractérisé en ce que**
la variation de poids est déterminée par mesure d'une pluralité de valeurs de poids à différents moments pendant l'étape de chauffage et le montant de la pente d'un segment de droite représentatif d'une zone de contrôle (160) caractéristique de la variation de poids est défini en tant que valeur de contrôle et **en ce que** la valeur de référence est une valeur de pente qui est attendue pour l'article à mesurer et qui est mise en mémoire.

2. Procédé selon la revendication 1,
**caractérisé en ce que**
une fonction de régression (150) est déterminée à partir de la variation de poids, la variation de poids est divisée en parties de variation de poids (110, 120, 130, 140) et la zone de contrôle caractéristique (160) est formée à partir d'au moins une partie de variation de poids (110, 120, 130, 140), pour laquelle les pentes de la fonction de régression (150) présentent un montant qui est supérieur ou égal à une valeur minimale de pente.

3. Procédé selon la revendication 1,
**caractérisé en ce que**
un point d'inflexion d'une fonction de régression (150) déterminée à partir de la variation de poids est défini, la variation de poids est divisée en parties de variation de poids (110, 120, 130, 140) et la zone de contrôle caractéristique (160) est formée d'une partie de variation de poids (110, 120, 130, 140) qui comprend des limites réparties de manière symétrique autour du point d'inflexion.

4. Procédé selon la revendication 1,
**caractérisé en ce que**
le montant le plus important d'une pente d'une fonction de régression (150) déterminée à partir de la variation de poids est utilisé comme valeur de contrôle.

5. Procédé selon la revendication 1,
**caractérisé en ce que**
la variation de poids est divisée en parties de variation de poids (110, 120, 130, 140) et, pour chaque partie de variation de poids (110, 120, 130, 140), la pente d'une droite représentative est déterminée sur la base des valeurs de poids de cette partie de variation de poids (110, 120, 130, 140), la grandeur des parties de variation de poids (110, 120, 130, 140) étant sélectionnée de telle manière que les pentes des droites représentatives présentent le même signe, et le montant le plus important des pentes des droites représentatives étant utilisé comme valeur de contrôle.

6. Procédé selon la revendication 1,
**caractérisé en ce que**
la variation de poids est divisée en parties de variation de poids (110, 120, 130, 140) et, pour chaque partie de variation de poids (110, 120, 130, 140), la pente d'une droite représentative est déterminée sur la base des valeurs de poids de cette partie de variation de poids (110, 120, 130, 140), la grandeur des parties de variation de poids (110, 120, 130, 140) étant sélectionnée de telle manière que les pentes des droites représentatives présentent le même signe, et la zone de contrôle caractéristique (160) est formée à partir d'au moins une partie de variation de poids (110, 120, 130, 140) pour laquelle la pente d'une droite représentative présente un montant qui est supérieur ou égal à une valeur minimale de pente.
